# EUROPEAN PATENT APPLICATION

(11) **EP 3 985 838 A1**
(43) Date of publication of application: **20.04.2022**
(21) Application number: 20826099.2
(22) Date of filing: 21.05.2020
(51) Int. Cl.: H02K 1/17, H02K 1/22

(54) **MOTOR**

(30) Priority: 17.06.2019 CN 201920904240 U
(71) Applicant: Guangdong Zhaoqing L & V Co. Ltd, Zhaoqing, Guangdong 526238 (CN)
(72) Inventor: GONG, Hongyu, Zhaoqing, Guangdong 526238 (CN); JIANG, Yuan, Zhaoqing, Guangdong 526238 (CN); QIU, Xianghuai, Zhaoqing, Guangdong 526238 (CN); LIN, Dezeng, Zhaoqing, Guangdong 526238 (CN); XU, Fuji, Zhaoqing, Guangdong 526238 (CN); SHI, Bingdeng, Zhaoqing, Guangdong 526238 (CN)
(74) Representative: Banzer, Hans-Jörg
(86) International application number: PCT/CN2020/091600
(87) International publication number: WO 2020/253462

(57) **Abstract**

The present utility model relates to a motor. The motor includes a stator assembly and a rotor assembly, wherein the stator assembly includes a housing and a magnet, the rotor assembly includes a rotor, and the rotor, the magnet and the housing are arranged sequentially from inside to outside. Seen from an axial direction, an outer contour of the housing does not exceed the circumference of a first circle in a radial direction, and the outer contour of the housing coincides with the first circle at a portion thereof corresponding to a magnetic pole of the magnet, and the outer contour of the housing other than the portion corresponding to the magnetic pole of the magnet is recessed inward from the first circle in the radial direction, and the outer contour of the housing in a recessed portion is asymmetrical. Seen from the axial direction, the magnet is disposed between a second circle and a third circle. The housing and magnet of the utility model are smaller in volume and lighter in weight, maintain sufficient magnetic performance, and reduce the risk of demagnetization.

## Description

### Technical Field

The utility model relates to the field of motors, particularly to a motor with an improved housing shape and magnet shape.

### Background Art

Electric motors are widely used in various portable electronic equipment or other devices, and the permanent magnet DC motor is an important one among them. With the continuous improvement of automobile intelligence and comfort, the permanent magnet DC motor has become more and more widely used in automobiles, e.g. in multi-directional adjustment of a seat and adjustment of a window. In these applications, to reduce the weight of the entire vehicle, the motors need to be as light as possible.

A motor mainly comprises a rotor, a permanent magnet, a housing. Various improvements have been proposed in the prior art for minimizing the weight of the motor without affecting its performance. One of the solutions is to select new materials, and the currently mature solution is to replace the ferrite permanent magnet material with the rare earth permanent magnet material. Since the permanent magnet made of the rare earth permanent magnet material has a higher magnetic energy product, it may have a smaller volume. However, the rare earth permanent magnet material has a higher price.

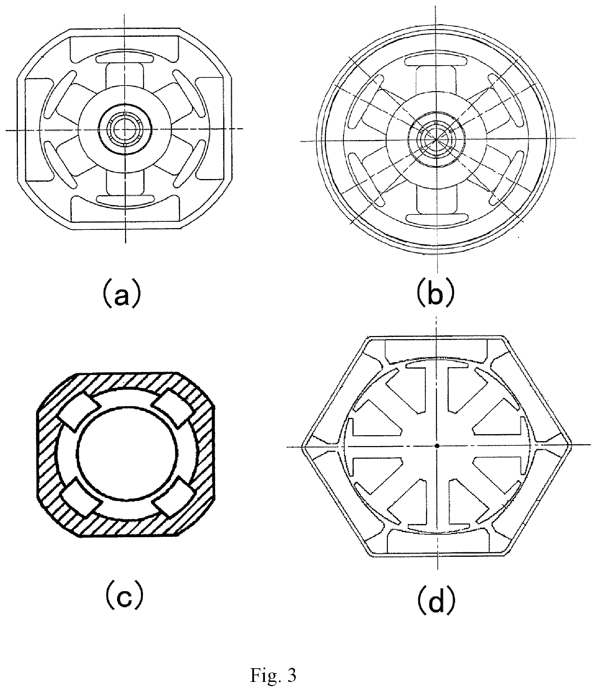

Another solution is to reduce the weight of the motor by adjusting sizes of the motor components. Fig. 3 shows various shapes of the motor components in the prior art. Among them, Fig. 3(a) shows a motor having a square housing with an arc transition portion, the housing having a constant thickness, and a plurality of magnets being arranged at the straight sides of the square housing; Fig. 3(b) shows a motor with a circular housing and circular magnets, and this design is the most common one; the housing in Fig. 3(c) is similar to that in Fig. 3(a), except that in Fig. 3(c), the inner contour of the housing is circular, and the magnet is disposed at a position corresponding to the arc transition; the motor housing in Fig. 3(d) is a regular polygon with multiple discontinuous magnets disposed on flat sides of the polygon. However, the above solutions all have their own shortcomings, failing to achieve a balance between the performance and the size/weight/cost of the motor.

Therefore, despite the above-mentioned solutions, it is still necessary to work out a motor improved in terms of the balance between size, weight, performance, etc.

### Summary of the utility model

The utility model provides the following technical solution:
A motor, comprising a stator assembly and a rotor assembly, wherein the stator assembly comprises a housing and a magnet, the rotor assembly comprises a rotor, and the rotor, the magnet, and the housing are arranged sequentially from inside to outside; seen from an axial direction, an outer contour of the housing does not exceed the circumference of a first circle in a radial direction, and the outer contour of the housing coincides with the first circle at a portion thereof corresponding to a magnetic pole of the magnet, and the outer contour of the housing other than the portion corresponding to the magnetic pole of the magnet is recessed inward from the first circle in the radial direction, and the outer contour of the housing in a recessed portion is asymmetrical; seen from the axial direction, the magnet is disposed between a second circle and a third circle.

Further, a part of the outer contour of the housing in the recessed portion is inside the first circle in the radial direction.

Further, the outer contour with some side edges inside the second circle is a circular arc or a broken line, or a combination of straight lines and curved lines.

Further, a part of the outer contour of the housing in the recessed portion is between the first circle and the second circle.

Further, the outer contour of the housing between the first circle and the second circle is a straight line or a curved line, or a combination of straight line and curved line.

Further, the outer contour of the magnet is the same as an inner contour of the housing.

Further, the inner contour of the magnet coincides with the third circle at magnetic poles thereof, and a part of the inner contour of the magnet between the magnetic poles protrudes to the outside relative to the third circle in a radial direction.

Further, a part of the inner contour of the magnet protruding to the outside is a curved line or a straight line, or a combination of curved line and straight line.

Further, the first circle, the second circle, and the third circle are concentric circles.

Further, the motor is a permanent magnet DC motor.

The motor obtained from the above technical solution is improved in shapes of the housing and the magnetic poles, which reduces the weight and cost, and reduces the risk of demagnetization.

### Brief Description of the Drawings

The exemplary embodiments of the present utility model are described with reference to the accompanying drawings, in which:
Fig. 1 is a front view of the motor of the utility model.
Fig. 2 is a cross-sectional view of a motor in an embodiment of the present utility model viewed from the section line A-A of Fig. 1.
Fig. 3(a), Fig. 3(b), Fig. 3(c), and Fig. 3(d) in Fig. 3 show several motor structures in the prior art.

All the drawings are only schematic and are not necessarily drawn to scale. In addition, they only show the portions necessary to clarify the present utility model, and other portions are omitted or only mentioned. That is, in addition to the components shown in the drawings, the present utility model may also include other components.

### Detailed Description of the Embodiments

The technical solution of the utility model is described in detail below with reference to the drawings.

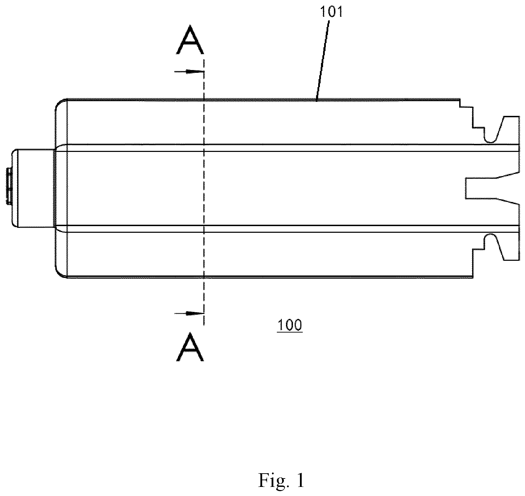

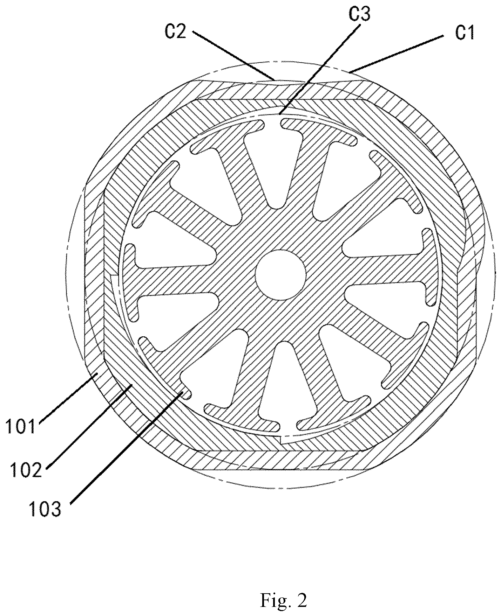

Fig. 1 shows the structure of the motor 100 of the present utility model. The motor 100 is composed of a housing 101 and components arranged inside the housing 101. As shown in Fig. 1 and Fig. 2, the magnet 102 and the rotor 103 are arranged in the housing 101. The rotor 103 is connected with an output (not shown) shaft to output power to the outside. In addition, components such as bearings are provided in the motor. The housing 101 is generally made of metal and has a tubular structure with a certain length as a whole. The housing 101 serves as a magnetic path of the magnet 102. The housing 101 has an opening and an end cover for closing the opening, wherein the opening can also be closed by a reduction gear box. The rotor 103, the magnet 102 and the housing 101 are arranged sequentially from the inside to the outside in the radial direction. The housing 101 and the magnet 102 may be referred to as a stator assembly. The rotor 103 has a central portion in the center, multiple teeth extend radially outward from the central portion, and slots are formed between the multiple teeth, the teeth being provided with windings. The rotor 103 together with windings, output shaft and other components are called a rotor assembly.

The magnet 102 can be made of ferrite or a rare earth material. During the manufacturing process, the ferrite powder or anisotropic or isotropic bonded neodymium iron boron magnetic powder is mixed with epoxy resin glue and then molded by pressing; alternatively, the ferrite magnetic powder or anisotropic or isotropic neodymium iron boron magnetic powder is mixed uniformly with a thermoplastic compound such as PA and PPS to make pellets, and then the pellets are molded into magnets in an injection molding machine.

Therefore, when the above-mentioned manufacturing method is adopted, the shape design of the magnet will affect the amount of material used for the magnet, thereby affecting the weight, cost, and performance of the magnet.

An embodiment of a magnet and a motor having the magnet in the present utility model will be described below with reference to Fig. 2. Referring to Fig. 2, the motor includes a housing 101, a magnet 102 and a rotor 103. The rotor 103 is provided in the magnet 102, and an air gap is arranged between the outer contour of the rotor 103 and the inner contour of the magnet 102. The outer contour of the housing 101 is based on the first circle C1, and viewed from the axial direction of the motor, the outer contour of the housing 101 does not exceed the radial outer side of the first circle C1; the inner contour of the housing 101 is based on the second circle C2, the part of the housing 101 corresponding to the magnetic pole of the magnet 102 is between the first circle C1 and the second circle C2, while the other part of the housing 101 is at least partially in the radial interior of the second circle C2. It can be seen from Fig. 2 that the magnet 102 has four magnetic poles. For the convenience of description, the portions corresponding to the magnet sections are referred to as corners and the portions between the corners are referred to as side edges.

Specifically, it can be seen from Fig. 2 that the left part and the lower part of the outer contour line of the housing 101, i.e. the outer contour of the left side edge and the outer contour of the lower side edge of the housing, are respectively formed by a straight line intersecting the first circle C1. The two straight lines can be tangent to the second circle C2. In addition, the two straight lines can be perpendicular to each other. The upper part and the right part of the outer contour line of the housing 101, i.e. the outer contour of the upper side edge and the outer contour of the right side edge of the housing, are not straight lines. A part of the outer contour of the upper side edge of the housing is in the radial interior of the second circle C2, while none of the outer contour line of the right side edge of the housing is in the radial interior of the second circle C2. In other words, points on the outer contour of this part are either on the radial exterior of the second circle C2 or on the second circle C2. Preferably, the outer contour line of the upper side edge of the housing is a circular arc or a broken line/connected lines, or a combination of straight lines and curved lines. Preferably, the outer contour line of the right side edge of the housing is a combination of straight lines and curved lines.

Although the exemplary embodiment in Fig. 2 only describes in detail a specific shape of the outer shape of the housing 101 with four corners and four side edges, one of the main ideas of the present utility model lies in that the outer contour of each of the side edges of the housing 101 is formed by inward asymmetrical cutting and shaping on the basis of a circle. Therefore, this cutting and shaping can be applied to other numbers of side edges.

Cutting the outer contour of the housing 101 on the basis of the first circle C1 enables the housing to have a thin portion. Firstly, compared with an annular housing, such a housing is lighter, uses fewer materials, and causes lower costs. Secondly, this design facilitates the installation of the motor.

Next, the contour of the magnet 102 will be described. The cross-section of the magnet 102 is located inside a ring whose inner and outer circles are concentric circles (a person skilled in the art can understand that the expression that the cross-section is "inside" the ring should include the circumstance that a part of the cross-section coincides with the inner and outer contours of the ring), wherein the outside of the ring is the second circle C2, and the inside of the ring is the third circle C3; based on this ring, the inner contour of the magnet is formed by conducting asymmetrical cutting and shaping on the inner circle of the ring, i.e. the third circle C3. The outer contour of the magnet 102 may be the same as the outer contour of the housing 101, e.g. the outer contour of the magnet 102 on the right in Fig. 2; alternatively, the outer contour of the magnet 102 may not be the same as the outer contour of the housing 101. For example, the outer contour of the magnet 102 on the upper side in fig. 2 does not dent as the outer contour of the housing 101 is dented. On the whole, the outer contour of the magnet 102 fits with the inner contour of the housing 101.

The cutting on the basis of the second circle C2 enables the magnet to have a thin portion. Firstly, compared with an annular magnet, such a magnet is lighter, uses fewer materials, and causes lower costs. Secondly, this design is helpful for the shift of direction at the forward or reverse direction, and makes the surface magnetic distribution uniform and with less fluctuation, thus making the motor rotate smoothly.

The inner contour of the magnet 102 is based on the third circle C3, a part of which coincides with the third circle C3, and the part that does not coincide with the third circle C3 is I in the radial exterior of the third circle C3, and can have various forms. The inner contour of the corner of the magnet 102 coincides with the third circle C3; the inner contour of the side edge of the magnet 102 does not coincide with the third circle C3. Fig. 2 schematically shows the situations in which the inner contours of several different forms of magnet 102 are radially recessed with respect to the third circle C3. The concave contour line of the inner contour portion of the magnet 102 corresponding to the side edge may be a symmetrical curve or a straight line, e.g. the recess corresponding to the upper side edge in Fig. 2, or it may be asymmetrical, being a combination of curved lines or straight lines, e.g. the recess corresponding to the left side edge or the lower side edge in Fig. 2.

The recess of the inner contour of the magnet 102 can be a combination of the above-mentioned forms of recesses, and the recess can be combined with the asymmetrical cutting and shaping of the outer contour of the housing 101. Fig. 2 only illustrates an example, and does not mean that the recess at the inner contour of the magnet 102 is corresponding to the asymmetric cutting of the outer contour of the housing 101 in form.

The reluctance torque shall be reduced when the teeth of the rotor 103 enter or leave the boundary of the magnet area, so as to avoid the instantaneous impact fluctuation of electromagnetic induction, because such an instantaneous impact fluctuation puts the magnet into the risk of demagnetization. In addition to reducing the cost and volume, the utility model can also reduce the electromagnetic induction impact at the boundary through this thinning treatment, thereby reducing the risk of demagnetization. Therefore, the above design not only maintains sufficient magnetic performance of the magnetic field of the magnet, but also reduces the risk of demagnetization, while making the volume smaller, the weight lighter, and the structure more compact and reasonable.

A clear and complete description of the present utility model has been made with reference to the exemplary embodiments. Those skilled in the art should understand that, modifications made to the disclosed technical solution may involve various other embodiments without departing from the spirit and scope of the present utility model. These embodiments should be understood as falling within the scope of the present utility model determined by the claims and any equivalent technical solution thereof.

## Claims

1. A motor comprising a stator assembly and a rotor assembly, wherein the stator assembly comprises a housing (101) and a magnet (102), the rotor assembly comprises a rotor (103), and the rotor (103), the magnet (102), and the housing (101) are arranged sequentially from inside to outside, **characterized in that**:
seen from an axial direction, an outer contour of the housing (101) does not exceed the circumference of a first circle (C1) in a radial direction, and the outer contour of the housing (101) coincides with the first circle (C1) at a portion thereof corresponding to a magnetic pole of the magnet (102), and the outer contour of the housing (101) other than the portion corresponding to the magnetic pole of the magnet (102) is recessed inward from the first circle (C1) in the radial direction, and the outer contour of the housing (101) in a recessed portion is asymmetrical;
seen from the axial direction, the magnet (102) is disposed between a second circle (C2) and a third circle (C3).

2. The motor according to claim 1, **characterized in that** a part of the outer contour of the housing (101) in the recessed portion is inside the first circle (C1) in the radial direction.

3. The motor according to claim 2, **characterized in that** the outer contour with some side edges inside the second circle (C2) is a circular arc or a broken line, or a combination of straight line and curved line.

4. The motor according to claim 1, **characterized in that** a part of the outer contour of the housing (101) in the recessed portion is between the first circle (C1) and the second circle (C2).

5. The motor according to claim 4, **characterized in that** the outer contour of the housing (101) between the first circle (C1) and the second circle (C2) is a straight line or a curved line, or a combination of straight line and curved line.

6. The motor according to any of claims 1-5, **characterized in that** the outer contour of the magnet (102) is the same as an inner contour of the housing (101).

7. The motor according to any of claims 1-5, **characterized in that** the inner contour of the magnet (102) coincides with the third circle (C3) at magnetic poles thereof, and a part of the inner contour of the magnet (102) between the magnetic poles protrudes to the outside relative to the third circle (C3) in a radial direction.

8. The motor according to claim 7, **characterized in that** a part of the inner contour of the magnet (102) protruding to the outside is a curved line or a straight line, or a combination of curved line and straight line.

9. The motor according to any of claims 1-5, **characterized in that** the first circle (C1), the second circle (C2), and the third circle (C3) are concentric circles.

10. The motor according to any of claims 1-5, **characterized in that** the motor is a permanent magnet DC motor.
